# EUROPEAN PATENT APPLICATION

(11) **EP 1 434 224 A2**
(43) Date of publication of application: **30.06.2004**
(21) Application number: 03028986.2
(22) Date of filing: 17.12.2003
(51) Int. Cl.: G11B 27/00

(54) **Recording apparatus**

(30) Priority: 26.12.2002 JP 2002378271
(71) Applicant: Kabushiki Kaisha Toshiba, Tokyo (JP)
(72) Inventor: Kobata, Hiroshi, Minato-ku Tokyo 105-8001 (JP); Miyashita, Yuji, Minato-ku Tokyo 105-8001 (JP)
(74) Representative: Henkel, Feiler & Hänzel

(57) **Abstract**

There is disclosed a management information storage section (103) which detects and stores management information on a folder recorded in a first recording/reproducing device. The management information includes a time that has elapsed from a time when the folder was prepared, the number of contents in the folder, and the like. A specific information storage section (104) stores specific information to specify the folder. The specific information includes an elapse time set value, the number of contents, and the like set by a user. An information comparison section (105) compares the management information stored in the management information storage section (103) with the specific information stored in the specific information storage section (104). When the management information meets the specific information, the comparison result is provided. A folder state display section (106) notifies the user of the comparison result.

## Description

The present invention relates to a recording/reproducing apparatus which includes, for example, a plurality of recording/reproducing sections and which moves/copies contents such as video and sound to a recording medium of a second recording/reproducing section from that of a first recording/reproducing section.

In recent years, recording/reproducing apparatuses each including a plurality of recording/reproducing sections have started to spread, such as an optical disk drive for recording contents such as video and sound compressed by an MPEG compression system in recordable optical disks such as a digital versatile disk (DVD)-RAM and a hard disk drive (HDD) for recording the contents in a hard disk.

In this recording/reproducing apparatus, in general, the contents recorded in the HDD can be moved and/or copied into the optical disk in the optical disk drive, or the contents recorded in the optical disk in the optical disk drive can be moved and/or copied into the HDD.

In the optical disk drive, unlimited information can be recorded by changing the disk. However, the HDD has a limited information recording capacity. Therefore, the recorded information needs to be managed in order to delete information that is not required any more from the information recorded in the HDD.

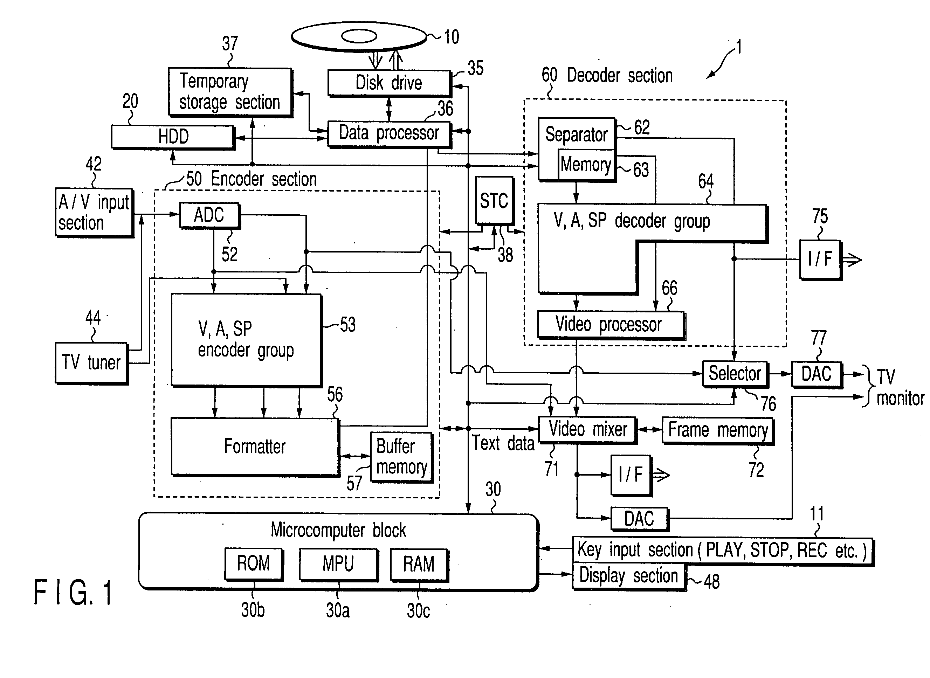

In Jpn. Pat. Appln. KOKAI Publication No. 2001-160052 (page 4, FIG. 1), a document management system for deleting the information that is not required in this manner is disclosed. In this publication, document management conditions such as a save period, reference period, and reference frequency of a document file are set. Documents satisfying the document management conditions are judged, and displayed in a judgment result list. A user can refer to this judgment result list to delete the unnecessary documents. Therefore, if there are a large number of documents meeting the document management conditions, the user cannot recognize these documents if the search button is not selected.

Therefore, a feature of the present invention is to detect that management information on a folder for managing data recorded in a recording device meets certain predetermined conditions and to notify a user of this, so that information management is facilitated.

According to one aspect of the present invention, there is provided an apparatus including: a recording unit which records data; a management information storage section in which management information on a folder to manage the data recorded in the recording unit is stored; a specific information storage section in which specific information to specify the folder is stored; a comparison section which compares the management information stored in the management information storage section with the specific information stored in the specific information storage section; and a notification section which notifies a comparison result of the comparison section.

When a recorded data amount of a folder, time that has elapsed from preparation of the folder, or the number of contents in the folder reaches a predetermined certain amount, or certain time with respect to the folder prepared in the recording/reproducing apparatus, this is automatically detected, and the user can be notified of the result.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a constitution of a recording/reproducing apparatus to which the present invention is applied;
FIG. 2 shows one example of a function block diagram showing a folder management function of a recording/reproducing apparatus 1a according to a first embodiment of the present invention;
FIG. 3 shows a constitution example of a management information table 90 managed by a management information storage section 103;
FIG. 4 is a diagram showing one example of a specific information setting screen;
FIGS. 5A and 5B are diagrams showing one example of a folder list display screen;
FIG. 6 is a diagram showing one example of the specific information setting screen;
FIG. 7 is a diagram showing one example of the specific information setting screen;
FIG. 8 is a diagram showing one example of the specific information setting screen;
FIG. 9 is a diagram showing one example of the specific information setting screen for all folders;
FIG. 10 is a flowchart showing an operation of a second embodiment of the present invention;
FIG. 11 is a function block diagram showing a folder management function of a recording/reproducing apparatus 1b according to the second embodiment;
FIG. 12 is a flowchart showing the operation of the second embodiment; and
FIG. 13 is a function block diagram showing the folder management function of the recording/reproducing apparatus according to a third embodiment of the present invention.

Embodiments of the present invention will be described in detail with reference to the drawings.

FIG. 1 is a block diagram showing a constitution of a recording/reproducing apparatus to which the present invention is applied. A recording/reproducing apparatus 1 includes main constitutional elements such as: a hard disk drive (HDD) 20; a disk drive 35 which rotates/drives an optical disk 10 that is an information storage medium capable of constructing a video file to execute read/write of information; an encoder section 50 constituting a recording side; a decoder section 60 constituting a reproducing side; and a microcomputer block 30 which controls an operation of an apparatus main body.

The encoder section 50 includes: an analog/digital converter (ADC) 52; an encoder group 53 including a video (V) encoder, an audio (A) encoder, and a sub-picture (SP) encoder; a formatter 56 which formats outputs of the respective encoders into predetermined formats; and a buffer memory 57.

Into the ADC 52, an external analog video signal + external analog audio signal from an A/V input section 42, or an analog TV signal + analog sound signal from a television (TV) tuner 44 are inputted.

Under control of the microcomputer block 30, a data processor 36 supplies DVD recorded data outputted from the encoder section 50 to the disk drive 35, takes a DVD reproduced signal reproduced from the optical disk 10 from the disk drive 35, rewrites management information recorded in the optical disk 10, or deletes the data recorded in the optical disk 10.

The microcomputer block 30 includes a micro processing unit (MPU) 30a, a ROM 30b in which control programs are written; and a RAM 30c for providing a work area required for program execution.

The MPU 30a follows the control program stored in the ROM 30b and including the present invention, and uses the RAM 30c as the work area to execute edition, detection of a defect place, detection of an unrecorded region, recording position setting of video information, UDF recording, AV address setting, and the like.

The decoder section 60 includes: a separator 62 for separating and extracting each pack from video information including a pack structure; a memory 63 for use in separating the packs and in processing signals; a decoder group 64 constituted of a V decoder for decoding main picture data separated by the separator 62, an SP decoder for decoding sub-picture data separated by the separator 62, and an A decoder for decoding the audio data separated by the separator 62; and a video processor 66 for appropriately synthesizing the main picture data obtained from the V decoder with the sub-picture data obtained from the SP decoder to superpose and output sub-pictures such as a menu and subtitles on a main picture.

The output of the video processor 66 is inputted into a video mixer 71. In the video mixer 71, text data is synthesized. Moreover, the video mixer 71 is also connected to a line for directly taking signals from the TV tuner 44 or the A/V input section 42. The video mixer 71 is connected to a frame memory 72 for use as a buffer. When the output of the video mixer 71 is a digital output, the output is outputted to the outside via an interface (I/F) 73. When the output of the video mixer 71 is an analog output, the output is outputted to display devices such as a TV monitor via a DAC 77.

To output the digital output from the A decoder, the output is outputted to the outside via an interface (I/F) 75. To output the analog output from the A decoder, the output is analog-converted by the DAC 77 via a selector 76, and is outputted to the speaker or the TV monitor via an audio amplifier. The selector 76 selects and outputs one of a signal inputted from the TV tuner 44 or the A/V input section 42 via the ADC 52 and a signal inputted from the decoder group 64 in response to a select signal from the microcomputer block 30.

A key input section 11 is disposed, for example, on the apparatus main body and a remote controller, and includes buttons of play (PLAY), stop (STOP), record (REC), skip, fast forward (FF), and reverse (Rev), a slow enter key, a direction key, and the like. A user presses the button to operate the present recording/reproducing apparatus, so that the recording/reproducing can be carried out with respect to the HDD 20 or the recordable optical disk 10. The user can also copy or move the video data recorded in the HDD into the optical disk 10.

A folder management function by the present invention will hereinafter be described in detail. Here, the folder indicates a virtual folder prepared for the user to easily manage contents data having a file form recorded in the disk.

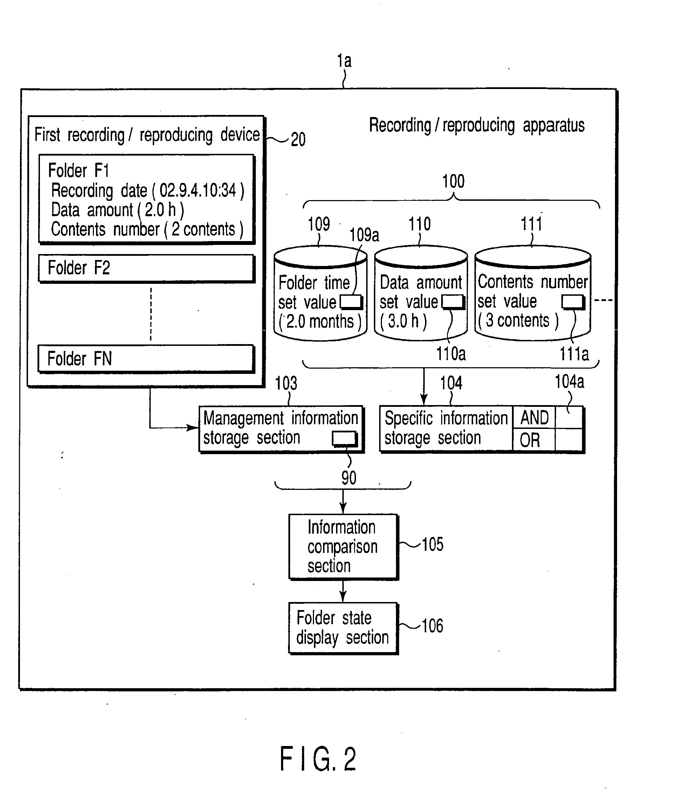

FIG. 2 is one example of a function block diagram concretely showing a folder management function of a recording/reproducing apparatus 1a according to a first embodiment of the present invention. Here, the recording/reproducing apparatus shown in FIG. 1 to which the present embodiment is applied will be described, but the present invention can be applied to all systems for managing files, such as a personal computer.

In the present embodiment, when a data amount of a folder, time that has elapsed from preparation of the folder, or the contents in the folder reaches a predetermined certain amount, or certain time with respect to the folder prepared in the recording/reproducing apparatus, this is detected, and the user is notified of detection result.

A management information storage section 103 includes a management information table 90, and management information is stored indicating states of each folder such as a recording date and data amount of each folder recorded in the first recording/reproducing device 20. The first recording/reproducing device 20 corresponds, for example, to the HDD 20 of FIG. 1. A specific information storage section 104 includes a specific information setting table 100, and specific information prepared beforehand for specifying the folder is stored. An information comparison section 105 compares the management information stored in the management information table 90 with that stored in the specific information setting table 100, and outputs an instruction for result output to a folder state display section 106. The folder state display section 106 notifies the user of the state of the folder by the instruction from the information comparison section 105.

The management information storage section 103, specific information storage section 104, information comparison section 105, and folder state display section 106 can be constructed as the program and data tables using the memories disposed in the microcomputer block 30. It is to be noted that the management information table 90 and specific information setting table 100 may also be disposed in the first recording/reproducing device 20.

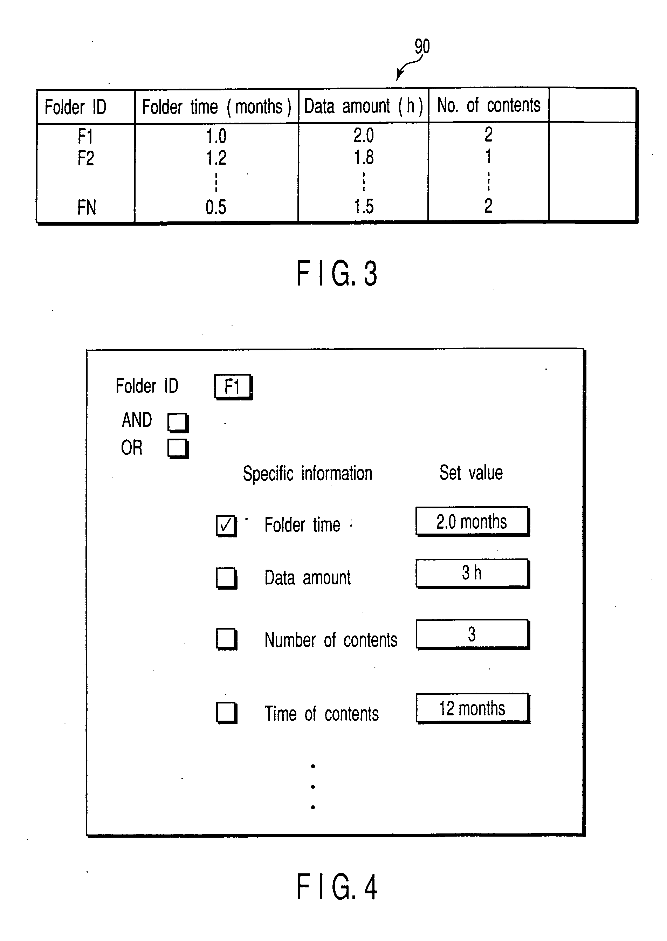

FIG. 3 shows a constitution example of the management information table 90 managed by the management information storage section 103. A "folder ID" is an identification number of each folder recorded in the first recording/reproducing device. A "folder time" indicates a time that has elapsed from a time when the folder was prepared, or a time for which the folder is not used. Here, the time for which the folder is not used is assumed. That is, a time that has elapsed from a time when the folder was used last to record or reproduce or edit the contents is assumed. A "data amount" indicates a total data amount of one or more contents recorded in each folder. Here, a reproduction time (h) is represented as a unit. Needless to say, this data amount may also be represented by a byte unit. The "number of contents" indicates the number of contents recorded in each folder. The data amount and the number of contents are updated every time the contents are recorded or deleted.

The contents indicate the video data such as television programs or a movie. For example, in a folder F1, one drama program is recorded as one content, and one or a plurality of contents are recorded. In a folder F2, one movie program is ' recorded as one content, and one or a plurality of contents are recorded.

Next, an operation of the present embodiment will concretely be described. A folder management method according to the present invention can be carried out only with respect to the folder selected from all the folders stored in the first recording/reproducing device 20, and can also be carried out with respect to all the folders.

First, the folder management performed only with respect to the selected folder will be described. In the present embodiment, the folder F1 is selected as the example to manage the folder. As shown in FIG. 3, it is assumed that in the management information table 90, the existing management information of the folder F1 includes the folder time (unused time) = 1.0 month, the data amount = 2.0 h, and the number of contents = 2 contents.

First, a case where a folder time (unused time) 109 of the specific information is set and notified will be described. The user refers to a specific information setting screen displayed, for example, in the TV monitor as shown in FIG. 4 while using the key input section 11 to input the folder ID as F1 here and to input the folder time, for example, as two months and to put a check in a check column of the "folder time". The specific information storage section 104 stores the folder time inputted by the user as the folder time set value 109 in the specific information table 100, and raises a check flag 109a. It is to be noted that a "time of contents" shown in FIG. 4 indicates the time for which the contents are not used, and indicates, for example, a time for which one content is not used for reproduction even once from a time when one content was recorded in the folder. This time of contents judged with respect to each content in the folder.

The information comparison section 105 compares the existing folder time (one month) of the folder F1 stored in the management information table 90 with a folder time set value (2.0 months) of the folder F1 set in the specific information table 100. Here, since the folder time (one month) of the folder F1 is smaller than the folder time set value (2.0 months), the information comparison section 105 does not take any action.

Thereafter, the time elapses, any new content is not inputted into the folder F1, and the folder time of the management information table 90 exceeds 2.0 months. Then, the information comparison section 105 automatically detects this, and outputs an instruction for notification with respect to the folder state display section 106 in order to notify the user.

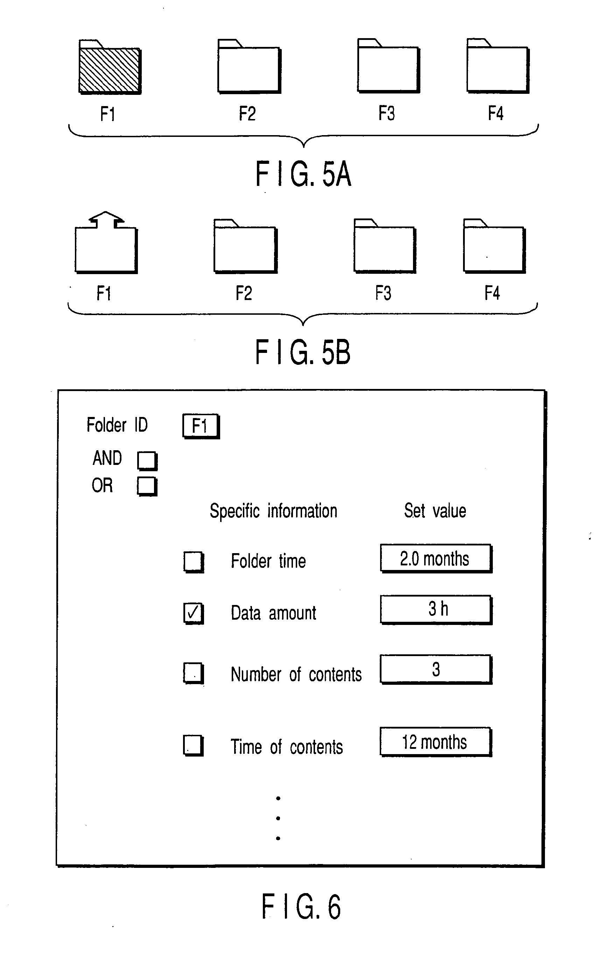

The folder state display section 106 notifies the user that the unused time of the folder F1 exceeds the set value (two months) by the notification instruction from the information comparison section 105. For example, the folder state display section 106 produces image display data indicating that the unused time of the folder F1 exceeds the set value. For this image, the corresponding folder may be displayed in a color different from that of another folder, for example, as in the folder F1 of FIG. 5A, or may be displayed in a changed shape as shown in FIG. 5B, or may blink. The user can refer to this image to delete the folder judged as unnecessary or to move the folder to another recording medium such as the disk 10. The folder detected in this manner may also automatically be deleted.

It is to be noted that a folder list displayed as shown in FIG. 5 is an image displayed by pressing, for example, a processing menu key (not shown) in the key input section 11 in a case where the user selects one of the contents recorded in the first recording/reproducing device 20 to reproduce the content, or a case where the contents are recorded.

For example, if the new content is inputted into the folder F1 within the unused time (two months) indicated by the folder time 109 stored in the specific information table 100, the management information (folder time) stored in the management information table 90 is cleared as 0 (month).

In this manner, according to the present embodiment, it can be detected and notified that any data is not inputted or referred to with respect to the folder for a set period. Therefore, since the folder required no longer is quickly detected, and the user can delete the folder or move the folder to another recording medium, the first recording/reproducing device can effectively be used.

Secondly, a case where the data amount of the folder is set and notified as the specific information will be described. The user refers to the specific information setting screen displayed in the TV monitor, for example, as shown in FIG. 6 while using the key input section 11 to input the folder ID as F1 here and to input the total data amount recorded in the folder, for example, as 3.0 h and to put the check in the check column of the data amount. The specific information storage section 104 stores the data amount inputted by the user as a data amount set value 110 in the specific information table 100, and raises a check flag 110a. The information comparison section 105 compares the existing data amount (one month) of the folder F1 stored in the management information table 90 with the data amount set value (3.0) of the folder F1 set in the specific information table 100. Here, since the existing data amount (one month) of the folder F1 is smaller than the data amount set value 110 (2.0 months), the information comparison section 105 does not take any action.

Thereafter, when a new content having a capacity of 1.5 h is added/recorded into the folder F1, a total folder data amount is 3.5 h. The information comparison section 105 automatically detects that the data amount of the folder F1 exceeds 3.0 h, and outputs the instruction for notification with respect to the folder state display section 106 in order to notify the user of this.

The folder state display section 106 prepares the image display data shown in FIG. 5 indicating, for the user, that the data amount of the folder F1 exceeds the set value by the notification instruction from the information comparison section 105.

The user can refer to this image to move the folder satisfying the predetermined data amount to another recording medium such as the disk 10 of the disk drive 35, and therefore the first recording/reproducing device can effectively be used.

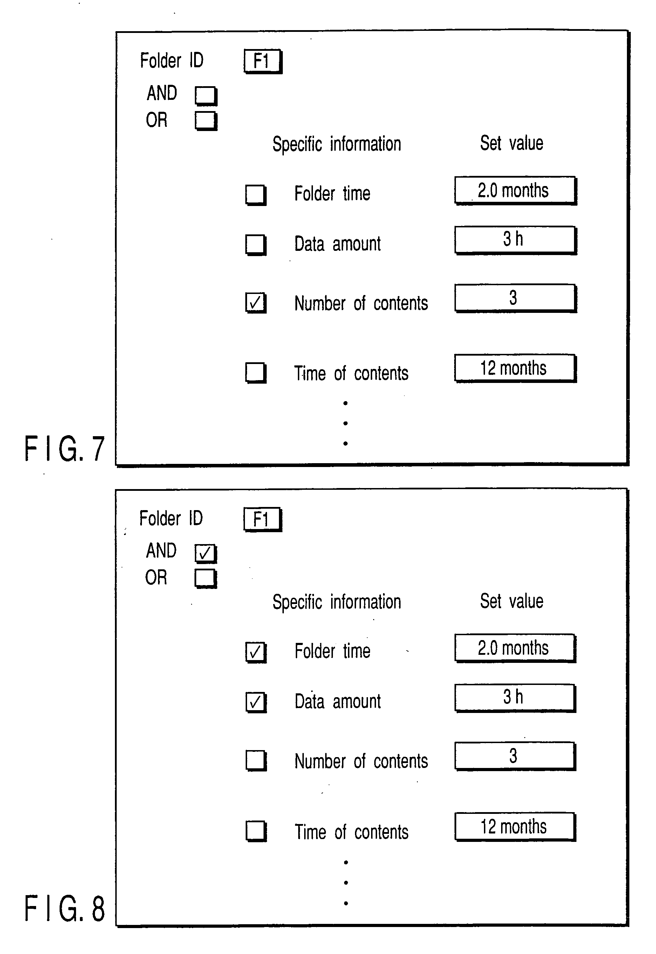

Thirdly, a case where the number of contents 111 is set and notified as the specific information will be described. The user refers to the specific information setting screen displayed in the TV monitor, for example, as shown in FIG. 7, while using the key input section 11 to input the folder ID as F1 here and to input the number of contents recorded in the folder, for example, as three contents and to put the check in the check column of the number of contents. The specific information storage section 104 stores the number of contents inputted by the user as the set value of the number of contents 111 in the specific information table 100, and raises a check flag 111a.

The information comparison section 105 compares the existing number of contents (two contents) of the folder F1 stored in the management information table 90 with the set value of the number of contents (three contents) of the folder F1 set in the specific information table 100. Here, since the existing number of contents (two contents) of the folder F1 is smaller than the set value of the number of contents 111 (three contents), the information comparison section 105 does not take any action.

Thereafter, when new two contents are added/recorded into the folder F1, the number of contents in the folder is four. The information comparison section 105 automatically detects that the number of contents in the folder F1 exceeds three contents, and outputs the instruction for notification with respect to the folder state display section 106 in order to notify the user of this. The folder state display section 106 prepares the image shown in FIG. 5 in order to notify the user that the number of contents of the folder F1 exceeds the set value by the notification instruction from the information comparison section 105.

The user can refer to this image to move the folder whose number of contents reaches a predetermined number to the other recording medium such as the disk 10 of the disk drive 35, and therefore the first recording/reproducing device can effectively be used.

Fourthly, a case where the folder time and data amount are set and notified as the specific information will be described. Here, the folder time indicates the time that has elapsed from the time when the folder was prepared, not a time for which the folder is not used.

The user refers to the specific information setting screen displayed in the TV monitor, for example, as shown in FIG. 8, while using the key input section 11 to input the folder ID as F1 here and to input the folder time, for example, as 2.0 months and to input the total data amount recorded in the folder, for example, as 3.0 h or less. In this manner, in the present embodiment, it is possible to set "or less". Furthermore, the user puts the checks in the check columns of the folder time and data amount and in the check column of AND on the upper left of the screen. Accordingly, the folder satisfying both the folder time set value and the data amount set value is searched. The specific information storage section 104 stores the folder time and data amount inputted by the user as the folder time set value 109 and data amount set value 110 in the specific information table 100, and raises the check flags 109a, 110a, 104a.

The information comparison section 105 compares the existing folder time (time that has elapsed from a time when the folder was prepared) of the folder F1 of 1.0 month stored in the management information table 90 with that of the folder time set value (two months) of the folder F1 set in the specific information table 100. The information comparison section 105 also compares the existing data amount (1 h) of the folder F1 stored in the management information table 90 with the data amount set value (3.0 h or less) of the folder F1 set in the specific information table 100. Here, the existing data amount (1 h) of the folder F1 satisfies the data amount set value (3 h or less), but the folder time (one month) is smaller than the specific information set value. Therefore, the information comparison section 105 does not take any action.

Thereafter, the time that has elapsed from the time when the folder F1 was prepared exceeds 2.0 months, and the total data amount of the folder reaches 2.5 h. Then, the information comparison section 105 outputs the instruction for notification to the folder state display section 106. That is, the information comparison section 105 automatically detects that the data amount of the folder F1 does not exceed a capacity of 3.0 h stored in the specific information storage section 104, even when the time exceeds the elapse time set value (2.0 months) of the folder F1 set in the specific information table 100, and outputs the instruction for notification with respect to the folder state display section 106 in order to notify the user of this. The folder state display section 106 prepares the image display data shown in FIG. 5 in response to the notification instruction from the information comparison section 105. It is to be noted that in this case the folder time of the folder F1 stored in the management information table 90 is not cleared by the input of the new contents.

The user can refer to this image to prepare the folder and to combine a folder in which the predetermined data amount cannot be obtained even with the elapse of a predetermined period with another folder, so that the folders can be organized.

Fifthly, one embodiment of a folder management method for managing all the folders stored in the first recording/reproducing device 20 will be described.

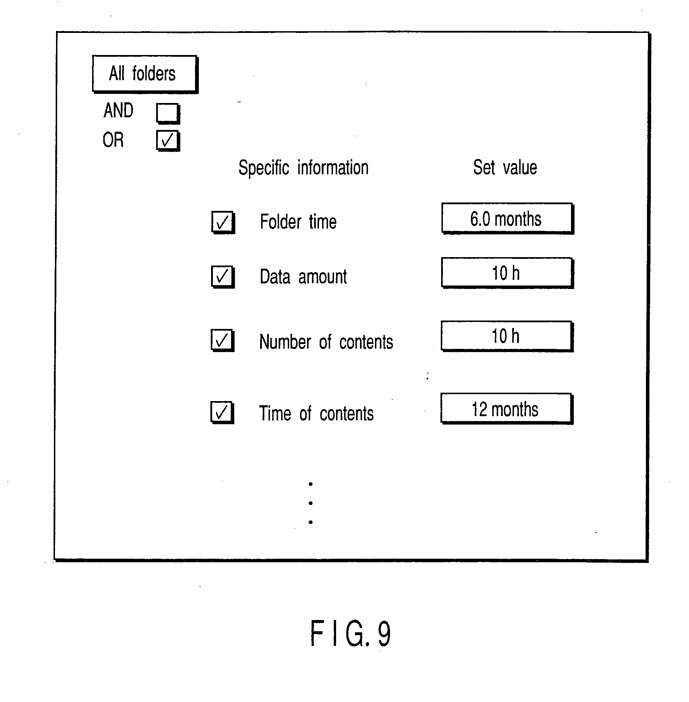

First, the user refers to the specific information setting screen for all the folders displayed in the TV monitor as shown in FIG. 9, while using the key input section 11 to set the specific information and to put the check in the required check column. Here, the check is put in an OR check column on the upper left of the screen. As a result, the folder in which the set value of one of four pieces of the specific information exceeds the set value is searched from the first recording/reproducing device 20. The specific information storage section 104 prepares the specific information table 100 based on the specific information set in this manner. It is to be noted that the set value of the specific information shown in FIG. 9 may also be set as a default value of the present apparatus. When there is a folder in which the specific information is individually set as described above, the specific information on the folders other than the folder is set.

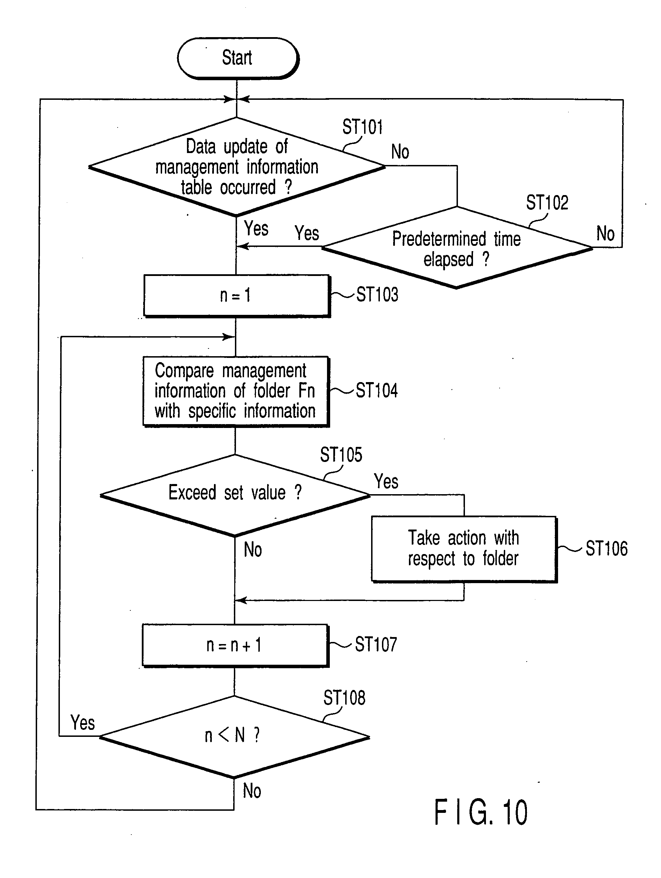

FIG. 10 is a flowchart showing an operation of the present embodiment.

When the data of the management information table 90 is updated by the recording, reproducing, or deleting of the contents with respect to the first recording/reproducing device 20 (YES in step 101), a variable n is set to 1 (ST103), and the information comparison section 105 compares the respective values of the management information (see the management information table 90 of FIG. 3) of the folder F1 with the corresponding specific information set values (see the specific information table 100 of FIG. 2) (ST104). If there is even one piece of information in which the value exceeds the corresponding specific information set value (satisfies the specific information set value) in the management information (YES in step 105), the folder is presented to the user as shown in FIG. 5 (ST106).

In step 107, 1 is added to the variable n, and it is judged in step 108 whether the variable n is less than the total number N of folders. When the variable n is less than the total folder number N, the flow shifts to step 104 to compare the management information with the specific information of the next folder. When the process of steps 104 to 108 is repeated, the corresponding management information of all the folders is compared with the corresponding specific information, and all comparison results are presented to the user. As a result, all the folders in the first recording/reproducing device 20 are managed based on the present invention.

It is to be noted that the data of the management information table 90 is not updated by the recording, reproducing, or deleting of the contents with respect to the first recording/reproducing device 20 (NO in step 101). In this case, a predetermined time interval is measured as in step 102, and the process of steps 104 to 108 is repeated every predetermined time interval.

Next, a second embodiment of the present invention will be described.

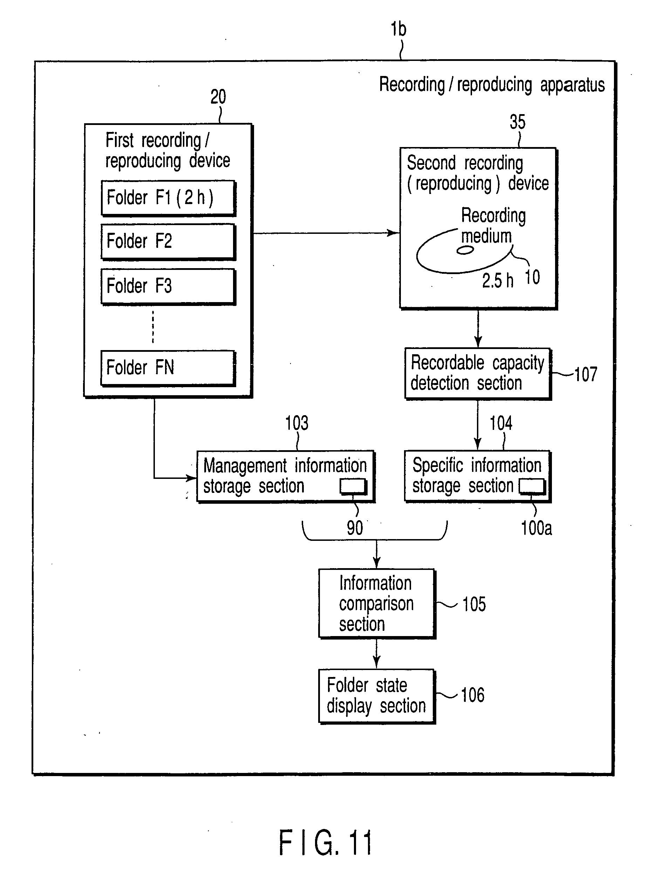

FIG. 11 is a function block diagram showing a folder management function of a recording/reproducing apparatus 1b according to the present embodiment. In the present embodiment, there are at least two recording/reproducing apparatuses which are disk drives such as HDD, DVD-RAM, DVD-RW, and DVD-R. For the information recording/reproducing apparatuses, one recording/reproducing apparatus includes a removable recording medium. Without taking actions such as the copying/moving into the recording medium with respect to the folder prepared in the HDD, the capacities are automatically compared, or the time that has elapsed from the time when the folder was prepared is measured, and the results are notified to the user.

The management information storage section 103 stores the information such as the recording time and data amount of each folder recorded in the first recording/reproducing device in the management information table 90. A recordable capacity detection section 107 detects a recordable capacity (free capacity) in the recording medium of the second recording/reproducing device 35. The specific information storage section 104 stores the free capacity of the second recording/reproducing device 35 detected by the recordable capacity detection section 107 in a specific information table 100a. The information comparison section 105 compares the management information stored in the management information table 90 with the free capacity stored in the specific information table 100a, and outputs an instruction for result output to the folder state display section 106. The folder state display section 106 notifies the user of the state of the folder by the instruction from the information comparison section 105.

In the present embodiment, for example, it is assumed that the free capacity of the recording medium 10 of the second recording/reproducing device 35 is 2.5 h, and management data of the folder F1 includes data amount = 2.0 h.

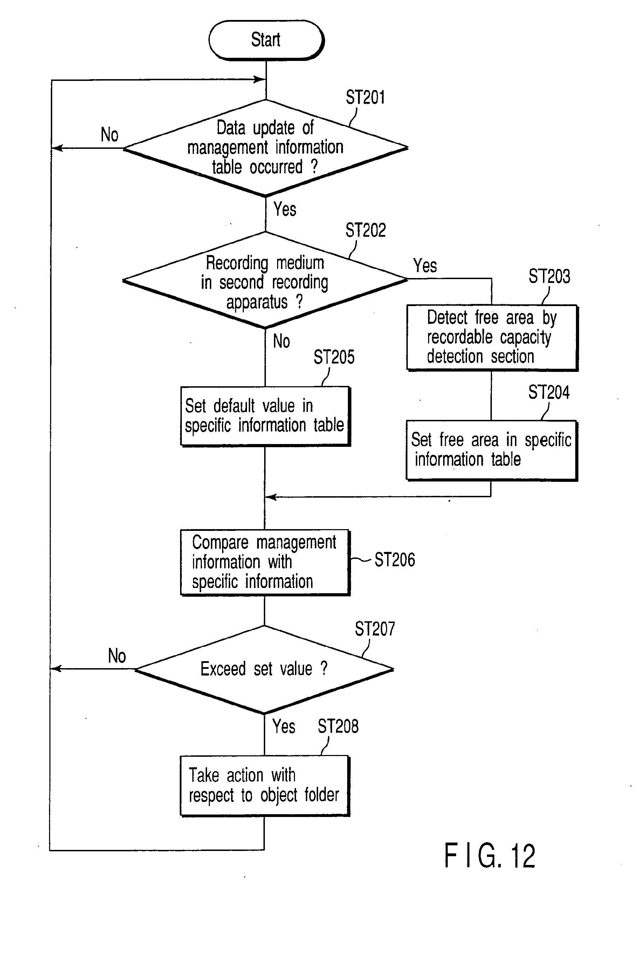

FIG. 12 is a flowchart showing the operation of the present embodiment. Here, the management of the data amount of the folder (comparison with the data amount set value 110) will be described. The management of the other management information is similar to that of the first embodiment.

When the data of the management information table 90 is updated by the recording, reproducing, and deleting of the contents with respect to the first recording/reproducing device 20 (YES in step 201), it is judged whether or not there is a recording medium in the second recording/reproducing device 35 (ST202). When there is a recording medium in the second recording/reproducing device 35, the recordable capacity detection section 107 detects a free capacity (2.5 h) of the recording medium (ST203). The specific information storage section 104 writes the detected free capacity into the specific information table 100a (ST204). When there is no recording medium in the second recording/reproducing device 35 (NO in ST202), the specific information storage section 104 sets a default value in the specific information table 100a (ST205). The default value indicates a recordable time of the recording medium 10 which can be applied, for example, to the second recording/reproducing device 35, that is, a recordable capacity of an unrecorded recording medium.

The information comparison section 105 compares the management information set in the management information table 90 (the existing data amount of the folder F1 of 2.0 h) with the specific information (2.5 h) set in the specific information table 100a (ST206). Here, since the data amount (2.0 h) of the folder F1 is smaller than the specific information (2.5 h), the information comparison section 105 does not take any action.

Thereafter, for example, when the new content having a data amount of 1.5 h is added/recorded in the folder F1, the total data amount of the folder F1 is 3.5 h. The information comparison section 105 detects that the data amount of the folder F1 exceeds 2.5 h, and outputs the instruction for the notification with respect to the folder state display section 106 in order to notify the user of this. The folder state display section 106 takes an action with respect to an object folder by the notification instruction from the information comparison section 105 (ST208). That is, for example, as shown in FIG. 5, the display form of the folder F1 is changed so as to change the color of the folder F1. Accordingly, when the user presses, for example, a menu button of the remote controller 11 in reproducing or recording the contents, it is displayed in the TV monitor that the data amount of the folder F1 exceeds the set value (2.5 h).

According to the present embodiment, the user can automatically be notified of an appropriate time for moving or copying the contents in the folder in the recording medium 10 of the second recording/reproducing device 35, or a folder whose contents can all be moved or copied to the recording medium 10. Moreover, a set time has elapsed after the folder was prepared, but the capacity of the recording medium of the second recording/reproducing device 35 is not reached. This can be detected and notified. It is to be noted that in the present embodiment, a data format may also be set as the specific information. In this case, the recordable capacity detection section 107 includes a format detection section, and detects the format of the recording medium 10. Moreover, the information comparison section 105 and folder state display section 106 notify the use of the folder or the data format of the contents that agrees with the format of the recording medium 10.

Next, a third embodiment of the present invention will be described.

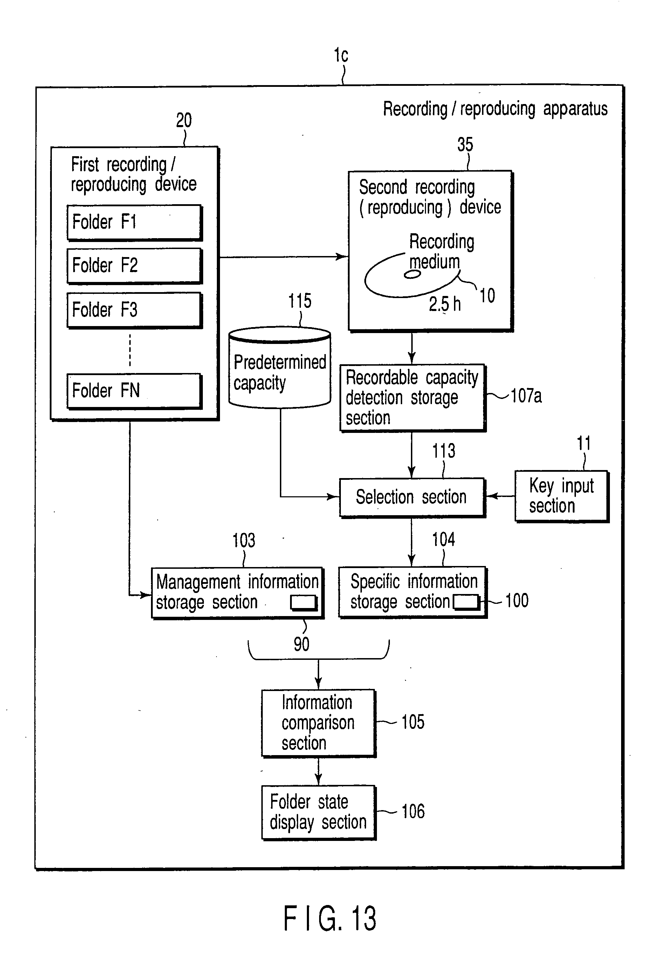

FIG. 13 is a function block diagram showing the folder management function of the recording/reproducing apparatus according to the present embodiment. Only the management of the data amount of the folder (comparison with the data amount set value 110) will hereinafter be described. The management of another management information is similar to that of the first embodiment.

The management information storage section 103 stores the information such as the recording time and data amount of each folder recorded in the first recording/reproducing device 20 in the management information table 90. A recordable capacity detection storage section 107a detects and stores the recordable capacity (free capacity) in the recording medium 10 of the second recording/reproducing device 35. A selection section 113 selects one of a predetermined capacity 115 prepared beforehand, the automatically detected free capacity of the recording medium, and a designated capacity arbitrarily inputted by the user via the key input section 11. Here, the predetermined capacity 115 is, for example, an unused recording capacity of the recording medium 10.

The specific information storage section 104 the specific information selected by the selection section 113 in the specific information table 100a. The information comparison section 105 compares the management data stored in the management information table 90 with the specific information stored in the specific information table 100a to output the instruction for the result output to the folder state display section 106. The folder state display section 106 notifies the user of the state of the folder by the instruction from the information comparison section.

In the present embodiment, the selection of the capacity from the predetermined capacity, free capacity, and designated capacity by the selection section 113 can be set by the input information from the key input section 11. As a result, for the specific information stored in the specific information table 100a, one of the unused recording capacity of the recording medium 10, the designated capacity arbitrarily inputted by the user, and the free capacity of the recording medium 10 is determined in response to the user's instruction. The subsequent operation is similar to that of the first and second embodiments.

## Claims

1. An apparatus **characterized by** comprising:
a recording unit (20, 30) which records data;
a management information storage section (103) in which management information on a folder to manage the data recorded in the recording unit is stored;
an information storage section (104) in which information to specify the folder is stored;
a comparison section (105) which compares the management information stored in the management information storage section (103) with the information stored in the information storage section (104); and
a notification section (106) which notifies a comparison result of the comparison section, when the comparison section finds that the management information meets the information.

2. The apparatus according to claim 1, **characterized in that** the management information storage section (103) stores a time that has elapsed from a time when preparing the folder in the recording unit (20), the information storage section (104) stores an elapse time set value, and the notification section (106) notifies a case in which the time that has elapsed from the time when preparing the folder exceeds the elapse time set value.

3. The apparatus according to claim 1, **characterized in that** the management information storage section (103) stores an amount of the data recorded in the folder prepared in the recording unit (20), the information storage section (104) stores a data amount set value, and the notification section (106) notifies a case in which the amount of the recorded data exceeds the data amount set value.

4. The apparatus according to claim 1, **characterized in that** the management information storage section (103) stores the number of contents recorded in the folder prepared in the recording unit (20), the information storage section (104) stores a set value of the number of contents, and the notification section (106) notifies a case in which the number of stored contents exceeds the set value of the number of contents.

5. The apparatus according to claim 1, **characterized in that** the information is one of a set value of a time that has elapsed from a time when preparing the folder in the recording unit (20), a data amount set value of the data recorded in the folder, and a set value of number of contents stored in the folder.

6. The apparatus according to claim 1, **characterized in that** the notification section (106) includes a folder state display section which provides folder display data to display a state of the folder prepared in the recording unit, and the folder state display section allows the folder to blink in accordance with the comparison result notified by the notification section.

7. The apparatus according to claim 1, **characterized in that** the notification section (106) includes a folder state display section which provides folder display data to display a state of the folder prepared in the recording unit, and the folder state display section changes a color of the folder in accordance with the comparison result notified by the notification section.

8. The apparatus according to claim 1, **characterized in that** the notification section (106) includes a folder state display section which provides folder display data to display a state of the folder prepared in the recording unit, and the folder state display section changes a shape of the folder in accordance with the comparison result notified by the notification section.

9. A apparatus **characterized by** comprising:
a first recording unit (20, 30);
a second recording unit (30, 35) which records information in a portable information storage medium (10);
a management information storage section (103) which detects and stores management information on a folder to manage data recorded in the first recording unit (20);
a information storage section (104) which stores information to specify the folder, including the information on the information storage medium (10) loaded to the second recording unit (35);
a comparison section (105) which compares the management information stored in the management information storage section (103) with the information stored in the information storage section (104); and
a notification section (106) which notifies a comparison result of the comparison section (105), when the comparison section (105) finds that the management information meets the information.

10. The apparatus according to claim 9, further comprising a recordable capacity detection section (107) which detects a recordable capacity of the information storage medium loaded to the second recording unit, wherein the information storage section (104) stores the recordable capacity detected by the recordable capacity detection section (107) as the information.
